# EUROPÄISCHE PATENTSCHRIFT

(11) **EP 1 928 707 B1**
(45) Veröffentlichungstag und Bekanntmachung des Hinweises auf die Patenterteilung: **31.03.2010**
(21) Anmeldenummer: 06792652.7
(22) Anmeldetag: 02.08.2006
(51) Int. Cl.: B60R 21/0132

(54) **VERFAHREN UND VORRICHTUNG ZUR ERZEUGUNG VON MINDESTENS EINEM MERKMAL FÜR EIN INSASSENSCHUTZSYSTEM**
METHOD AND DEVICE FOR GENERATING AT LEAST ONE CHARACTERISTIC FOR AN OCCUPANT PROTECTION SYSTEM
PROCEDE ET DISPOSITIF DE PRODUCTION D'AU MOINS UNE CARACTERISTIQUE POUR UN SYSTEME DE PROTECTION DES OCCUPANTS

(30) Priorität: 20.09.2005 DE 102005044767
(43) Veröffentlichungstag der Anmeldung: 11.06.2008
(73) Patentinhaber: ROBERT BOSCH GMBH, 70442 Stuttgart (DE)
(72) Erfinder: STUETZLER, Frank, Jürgen, Farmington Hills, 48331-0000 (US); KOEHLER, Armin, 74343 Sachsenheim (DE); BRANDENBURGER, Sabine, 70190 Stuttgart (DE); SCHULLER, Hermann, 75223 Niefern-Oeschelbronn (DE)
(86) Internationale Anmeldenummer: PCT/EP2006/064969
(87) Internationale Veröffentlichungsnummer: WO 2007/033854

(56) Entgegenhaltungen:
- EP-A1- 1 323 592
- WO-A-2005/061281
- US-A- 6 125 313
- US-B1- 6 512 969

## Beschreibung

### Stand der Technik

Die Erfindung geht aus von einem Verfahren zur Erzeugung von mindestens einem Merkmal für ein Insassenschutzsystem nach der Gattung des unabhängigen Patentanspruchs 1 oder von einer zugehörigen Vorrichtung.

Ein Verfahren zur Erzeugung von mindestens einem Merkmal für ein Insassenschutzsystem basierend auf einem erfassten Beschleunigungssignal, bekommt in der Regel nach einer Initialisierung eines zugehörigen Steuergerätes fortlaufend Beschleunigungsdaten zugeführt. Das Verfahren bestimmt durch Auswerten dieser Beschleunigungsdaten, ob sich das Fahrzeug augenblicklich in einer normalen Fahrsituation oder in einer potentiellen Crashsituation befindet. Die Crashsituation wird deshalb als potentielle Crashsituation bezeichnet, weil das Verfahren zu diesem Zeitpunkt ' nicht immer sicher entscheiden kann ob ein tatsächlicher Crash oder ein Misuse-Fall vorliegt. Während der normalen Fahrsituation sind große Teile des Verfahrens in einem Ruhezustand bzw. in einem zurückgesetzten Zustand, d.h. es werden keine Berechnungen durchgeführt, wodurch ein Rechnerkapazität schonender Ansatz realisierbar ist. Wird der potentielle Crashfall erkannt, dann werden auch die Teile des Verfahrens aktiviert, welche sich im Ruhezustand befinden und es werden beispielsweise Merkmale wie Geschwindigkeitsabbau des Fahrzeugs und/oder Insassenvorverlagerung während des Crash berechnet, Schwellwertkurven ausgewertet, Funktionen berechnet, welche die Auslöseentscheidungen treffen, usw.

Wird nach dem Verlassen des Ruhezustands festgestellt, dass es sich nur um eine Misuse-Situation handelt, muss sichergestellt werden, dass die berechneten Merkmale und Größen, wie beispielsweise der Geschwindigkeitsabbau und die Insassenvorverlagerung nach Beendigung der Misuse-Situation wieder in ihren Ausgangszustand überführt werden.

Bekannte Verfahren zur Erzeugung von mindestens einem Merkmal für ein Insassenschutzsystem verwenden häufig Fensterintegratoren, welche basierend auf einem erfassten Beschleunigungssignal die Merkmale Geschwindigkeitsabbau und Insassenvorverlagerung berechnen. Die Fensterintegratoren setzen sich selbst auf einen Ausgangswert zurück, wenn über eine längere Zeitspanne kein signifikantes, gerichtetes Beschleunigungssignal anliegt, d.h. die Fensterintegratoren weisen ein zeitlich durch die Fensterlänge begrenztes Gedächtnis auf. Bei einem alternativen Ansatz werden die Integratoren zur Berechnung der Merkmale Geschwindigkeitsabbau und Insassenvorverlagerung erst gestartet, wenn das erfasste Beschleunigungssignal eine so genannte Rauschschwelle erreicht oder überschreitet. Wird diese Rauschschwelle für eine längere Zeitspanne nicht mehr von dem erfassten Beschleunigungssignal überschritten, dann werden die Integratoren über einen konstanten Wert wieder zurückgeführt bzw. rückintegriert oder sofort auf einen Anfangszustand zurückgesetzt.

Dokument EP 1 323 592 A zeigt ein Verfahren nach dem Oberbegriff des Anspruchs 1.

### Vorteile der Erfindung

Das erfindungsgemäße Verfahren zur Erzeugung von mindestens einem Merkmal für ein Insassenschutzsystem mit den Merkmalen des unabhängigen Patentanspruchs 1 hat demgegenüber den Vorteil, dass während eines Normalbetriebs aus dem mindestens einen Basismerkmal mindestens ein Kurzzeitfensterintegrat berechnet wird, welches bei Vorliegen einer Startbedingung für einen Crashbetrieb einen Startwert für eine Berechnung eines zugehörigen Langzeitintegrals liefert, wobei das mindestens eine Langzeitintegral einem nachfolgenden Verfahren die Merkmale zur Erzeugung des Auslösesignals für die Insassenschutzvorrichtung zur Verfügung stellt. Das erfindungsgemäße Verfahren setzt durch die Berechnung des Kurzzeitfensterintegrals im Normalbetrieb in vorteilhafter Weise einen Rechnerkapazität schonenden Ansatz um und ermöglicht durch die Übergabe von Startwerten zur Berechnung des Langzeitintegrals nach einer erkannten potentiellen Crashsituation eine schnellere Berechnung der Merkmale, welche von nachfolgenden Verfahren zur Erzeugung eines Auslösesignals für die Insassenschutzmittel ausgewertet werden, so dass sich eine insgesamt kürzere Laufzeit für die Entscheidungsfindung ergibt, ob eine Auslösung der Insassenschutzmittel erforderlich ist oder nicht. Durch die Kombination der Berechnung des mindestens einen Kurzzeitfensterintegrals mit der Berechnung des mindestens einen zugehörigen Langzeitintegrals erzeugt das erfindungsgemäße Verfahren in vorteilhafter Weise robuste Startbedingungen, ohne Informationen über die zu berechnenden Merkmale zu verlieren.

Die erfindungsgemäße Vorrichtung zur Erzeugung von mindestens einem Merkmal für ein Insassenschutzsystem mit den Merkmalen des unabhängigen Patentanspruchs 8 umfasst die erforderlichen Mittel zur Durchführung des erfindungsgemäßen Verfahrens zur Erzeugung von mindestens einem Merkmal für ein Insassenschutzsystem.

Durch die in den abhängigen Ansprüchen aufgeführten Maßnahmen und Weiterbildungen sind vorteilhafte Verbesserungen des im unabhängigen Patentanspruch 1 angegebenen Verfahrens zur Erzeugung von mindestens einem Merkmal für ein Insassenschubsystern und der im unabhängigen Patentanspruch 8 angegebenen zugehörigen Vorrichtung möglich.

Besonders vorteilhaft ist, dass während des Crashbetriebs das mindestens eine Basismerkmal überwacht wird, um bei Vorliegen von vorgegebenen Bedingungen in den Normalbetrieb zurückzukehren, wobei zur Rückkehr vom Crashbetrieb in den Normalbetrieb ein Rückführungsvorgang für das mindestens eine Langzeitintegral dadurch ausgelöst wird, dass das überwachte Basismerkmal einen vorgegebenen Schwellwert erreicht oder unterschreitet. Durch den Rückführungsvorgang des Langezeitintegrals, werden in vorteilhafter Weise die Vorteile eines sich selbst zurücksetzenden Fensterintegrators mit einem erweiterten Verfahren zur Rückführung des Langzeitintegrators kombiniert, um keine Information über die Merkmale vor dem potentiellen Crashbeginn zu verlieren, und trotzdem eine maximal mögliche Flexibilität für die Rückführung der über das Langezeitintegral berechneten Merkmale bzw. Größen nach dem potentiellen Crashzustand zu haben. Dadurch ist es in vorteilhafter Weise möglich in Abhängigkeit von einer erkannte Situation unterschiedliche Rückführungsvarianten auszuführen, wie beispielsweise eine Rückführung mit einem konstanten Wert oder eine Rückführung mit einem festen oder variablen reduzierenden Faktor oder eine Rückführung auf einen vorgegebenen festen oder variablen Ausgangswert. Durch die Rückführung mit einem reduzierenden Faktor wird das Langezeitintegral relativ zu seinem derzeitigen Wert zurückgeführt. Dadurch ergibt sich im Vergleich zu einer Rückführung mit einem vorgegebenen konstanten Wert eine stabilere Rückführzeitspanne zwischen sehr großen und sehr kleinen Integratorwerten. Dies ist insbesondere für so genannte Folgesituationen von Bedeutung, wenn beispielsweise auf eine Misuse-Situation eine Crashsituation folgt.

Insbesondere ist es vorteilhaft, dass mindestens eines der Langzeitintegrate zur Erzeugung eines Systemrücksetzsignals zurückgekoppelt wird, wobei das Systemrücksetzungssignal alle Systemkomponenten in einen Ausgangszustand zurücksetzt.

Das erfindungsgemäße Verfahren erzeugt vorzugsweise aus einem als Basismerkmal erfassen Beschleunigungssignal die Merkmale Geschwindigkeitsabbau und/oder Insassenvorverlagerung, welche zur Erzeugung des Auslösesignals für die Insassenschutzmittel ausgewertet werden.

### Zeichnung

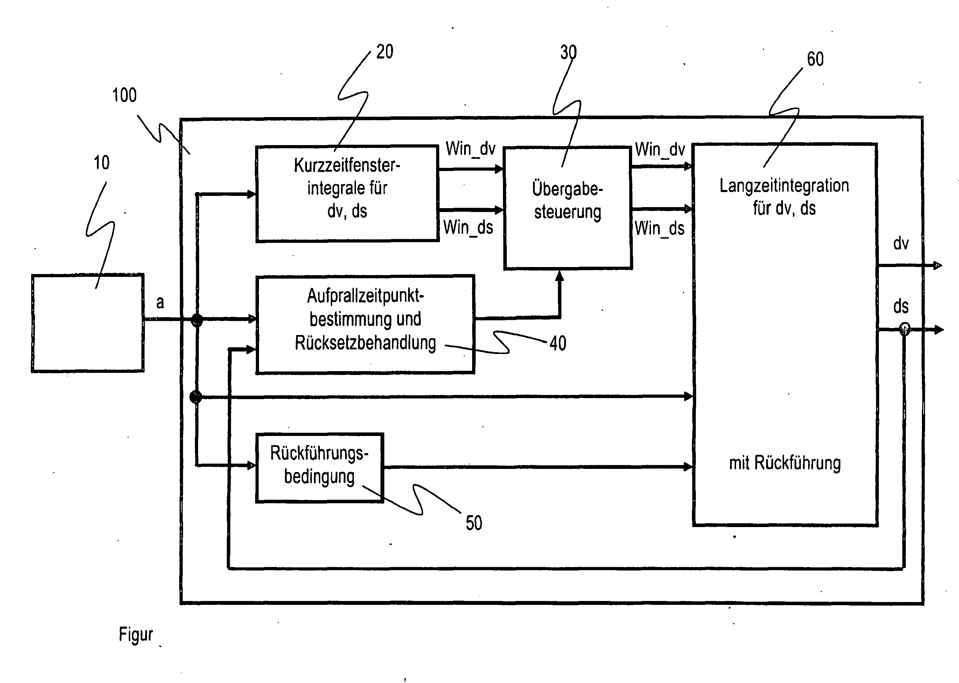

Ein Ausführungsbeispiel der Erfindung ist in der Zeichnung dargestellt und wird nachfolgend beschrieben. Die einzige Figur zeigt ein Blockdiagramm eines Ausführungsbeispiels einer Vorrichtung zur Durchführung eines erfindungsgemäßen Verfahrens zur Erzeugung von mindestens einem Merkmal für ein Insassenschutzsystem.

### Beschreibung

Wie aus der Figur ersichtlich ist, umfasst eine Vorrichtung zur Erzeugung von mindestens einem Merkmal dv, ds für ein Insassenschutzsystem eine Zentralsensorik 10, welche mindestens ein Basismerkmal a erfasst, und eine Auswerte- und Steuereinheit 100, welche das mindestens eine Basismerkmal a auswertet und das mindestens eine Merkmal dv, ds erzeugt und zur Erzeugung eines Auslösesignals für eine Insassenschutzvorrichtung an ein nachfolgendes Verfahren oder eine nachfolgende Vorrichtung ausgibt. Als Basismerkmal wird im dargestellten Ausführungsbeispiel von der Zentralsensorik 10 ein Beschleunigungssignal a erfasst und zur Auswertung an die Auswerte- und Steuereinheit 100 übertragen. Die Auswerte- und Steuereinheit 100 bestimmt aus dem als Basismerkmal erfassten Beschleunigungssignal a die Merkmale Geschwindigkeitsabbau dv und/oder Insassenvorverlagerung ds.

Zur Erzeugung der Merkmale Geschwindigkeitsabbau dv und Insassenvorverlagerung ds umfasst die Auswerte- und Steuereinheit 100 eine Kurzzeitintegratoreinheit 20, eine Übergabesteuerung 30 und eine Langzeitintegratoreinheit 60. Die Kurzzeitintegratoreinheit 20 berechnet resourcensparend während eines Normalbetriebs bis zum erkannten Start einer potentiellen Crashsituation aus dem mindestens einen Basismerkmal a ein erstes Kurzzeitfensterintegral Win_dv und ein zweites Kurzzeitfensterintegral Win_ds. Ein Block 40 erkennt durch eine entsprechende Aufbereitung und/oder Auswertung des Beschleunigungssignals a die Startbedingung für den potentiellen Crashbetrieb und aktiviert bei einem erkannten potentiellen Crashbetrieb die Übergabesteuerung 30. Die Startbedingungen zur Crashbestimmung sind so implementiert, dass eine potentielle Crashsituation rechtzeitig genug vor der geforderten Auslösezeit erkannt wird. Die Übergabesteuerung 30 übergibt bei Vorliegen einer im Block 40 ermittelten Startbedingung für einen potentiellen Crashbetrieb die berechneten Kurzzeitintegrale Win_dv, Win_ds als Startwert an die Langzeitintegratoreinheit 60. Die Langzeitintegratoreinheit 60 berechnet basierend auf den übergebenen Startwerten Win_dv, Win_ds in den folgenden Zyklen aus dem mindestens einen Basismerkmal a die zugehörigen Langzeitintegrale für den Geschwindigkeitsabbau dv und die Insassenvorverlagerung ds und gibt die berechneten Langzeitintegrale während des Crashbetriebs als Merkmale Geschwindigkeitsabbau dv und Insassenvorverlagerung ds an das nachfolgende Verfahren zur Erzeugung des Auslösesignals für die Insassenschutzvorrichtung aus. Dies hat den Vorteil dass man einerseits robuste Startbedingungen erzeugen kann und andererseits nichts von den Informationen über den Geschwindigkeitsabbau dv und die Insassenvorverlagerung ds verloren geht.

Im Block 50 überwacht die Auswerte- und Steuereinheit 100 während des Crashbetriebs das mindestens eine Basismerkmal a, wobei überprüft wird ob das mindestens eine Basismerkmal a vorgegebene Rückführungsbedingungen erfüllt. Es kann beispielsweise überprüft werden, ob das überwachte Basismerkmal a einen vorgegebenen Schwellwert erreicht oder unterschreitet. Sind die vorgegebenen Rückführungsbedingungen erfüllt, dann löst der Block 50 zur Rückkehr vom Crashbetrieb in den Normalbetrieb einen Rückführungsvorgang für das mindestens eine Langzeitintegral dv, ds aus. Das Langzeitintegral dv, ds kann beispielsweise mit einem konstanten Wert und/oder mit einem reduzierenden Faktor zurückgeführt werden. Zudem kann der reduzierende Faktor in Abhängigkeit von der ausgeführten Applikation variabel im Bereich von 0 bis 1 eingestellt werden. Somit kann bei der Verwendung des reduzierenden Faktors das Langzeitintegral relativ zu seinem derzeitigen Wert zurückgerührt werden. Damit ist die Rückführzeitspanne zwischen sehr großen und kleinen Integratorwerten stabiler im Vergleich zu einer Rückführung mit einem konstanten Wert. Die beschriebene erfindungsgemäße Ausführungsform kombiniert die Vorteile eines sich selbst zurücksetzenden Fensterintegrals mit einem erweiterten Verfahren der Integratorrückführung, um keine Informationen über den Geschwindigkeitsabbau dv und die Insassenvorverlagerung ds bis zum Crashbeginn zu verlieren und um eine flexible Rückführung dieser Merkmale dv, ds zu ermöglichen. Durch die flexible Rückführung der Merkmale kann in vorteilhafter Weise in Abhängigkeit von der ausgeführten Applikation oder von der erkannten Situation bestimmt werden, wie schnell eine jeweiliger Applikation bzw. Situation wieder in den Ausgangszustand zurückgeführt wird. Dies ist insbesondere für so genannte Folgesituationen von Bedeutung, wenn beispielsweise eine Crashsituation auf eine Misuse-Situation folgt.

Zur Erzeugung eines Systemrücksetzsignals kann mindestens ein Langzeitintegral bzw. ein Merkmal ds, dv zum Block 40 zurückgekoppelt werden. Im dargestellten Ausführungsbeispiel wird das Merkmal Insassenvorverlagerung ds zurückgekoppelt und der Block 50 erzeugt aus dem mindestens einen zurückgekoppelten Merkmal und dem Basismerkmal das Systemrücksetzungssignal, welches alle Systemkomponenten in einen Ausgangszustand zurücksetzen kann.

## Patentansprüche

1. Verfahren zur Erzeugung von mindestens einem Merkmal (dv, ds) für ein Insassenschutzsystem, welches aus mindestens einem Basismerkmal (a) bestimmt wird und welches zur Erzeugung eines Auslösesignals für eine Insassenschutzvorrichtung ausgewertet wird, **dadurch gekennzeichnet, dass** während eines Normalbetriebs aus dem mindestens einen Basismerkmal (a) mindestens ein Kurzzeitfensterintegral (Win_dv, Win_ds) berechnet wird, welches bei Vorliegen einer Startbedingung für einen Crashbetrieb als Startwert für eine Berechnung eines zugehörigen Langzeitintegrals (dv, ds) verwendet wird, wobei das mindestens eine Langzeitintegral (dv, ds) einem nachfolgenden Verfahren als Merkmal (dv, ds) zur Erzeugung des Auslösesignals für die Insassenschutzvorrichtung zur Verfügung gestellt wird.

2. Verfahren nach Anspruch 1, **dadurch gekennzeichnet, dass** die Startbedingung für den Crashbetrieb aus dem mindestens einen Basismerkmal (a) bestimmt wird.

3. Verfahren nach Anspruch 1 oder 2, **dadurch** gekennzeichet, dass während des Crashbetriebs das mindestens eine Basismerkmal (a) überwacht wird, wobei zur Rückkehr vom Crashbetrieb in den Normalbetrieb ein Rückführungsvorgang für das mindestens eine Langzeitintegral (dv, ds) **dadurch** ausgelöst wird, dass das überwachte Basismerkmal (a) einen vorgegebenen Schwellwert erreicht oder unterschreitet.

4. Verfahren nach Anspruch 3, **dadurch gekennzeichnet, dass** das Langzeitintegral (dv, ds) mit einem reduzierenden Faktor zurückgeführt wird.

5. Verfahren nach Anspruch 4, **dadurch gekennzeichnet, dass** der reduzierende Faktor in Abhängigkeit von der ausgeführten Applikation variabel im Bereich von 0 bis 1 eingestellt wird.

6. Verfahren nach einem der Ansprüche 1 bis 3, **dadurch gekennzeichnet, dass** mindestens ein Langzeitintegral (ds) zur Erzeugung eines Systemrücksetzsignals zurückgekoppelt wird, wobei das Systemrücksetzungssignal alle Systemkomponenten in einen Ausgangszustand zurücksetzt.

7. Verfahren nach einem der Ansprüche 1 bis 6, **dadurch gekennzeichnet, dass** das mindestens eine erzeugte Merkmal einem Geschwindigkeitsabbau (dv) und/oder einer Insassenvorverlagerung (ds) entspricht, welches aus einem erfassten Beschleunigungssignal (a) als Basismerkmal bestimmt werden.

8. Vorrichtung zur Erzeugung von mindestens einem Merkmal (dv, ds) für ein Insassenschutzsystem, insbesondere zur Durchführung des Verfahrens nach einem der Ansprüche 1 bis 7, mit mindestens einem Sensor (10), welcher mindestens ein Basismerkmal (a) erfasst, und einer Auswerte- und Steuereinheit (100), welche das mindestens eine Basismerkmal (a) auswertet und das mindestens eine Merkmal (dv, ds) erzeugt und zur Erzeugung eines Auslösesignals für eine Insassenschutzvorrichtung ausgibt, **dadurch** gekennzeichet, dass die Auswerte- und Steuereinheit (100) während eines Normalbetriebs aus dem mindestens einen Basismerkmal (a) mindestens ein Kurzzeitfensterintegral (Win_dv, Win_ds) berechnet und das berechnete Kurzzeitintegral (Win_dv, Win_ds) bei Vorliegen einer Startbedingung für einen Crashbetrieb als Startwert für eine Berechnung eines zugehörigen Langzeitintegrals (dv, ds) verwendet, wobei die Auswerte- und Steuereinheit (100) während des Crashbetriebs das mindestens eine Langzeitintegral (dv, ds) einem nachfolgenden Verfahren als Merkmal (dv, ds) zur Erzeugung des Auslösesignals für die Insassenschutzvorrichtung zur Verfügung stellt.

## Claims

1. Method for generating at least one characteristic (dv, ds) for a vehicle occupant protection system which is determined from at least one basic characteristic (a) and which is evaluated in order to generate a triggering signal for a vehicle occupant protection device, **characterized in that** at least one short-term window integral (Win_dv, Win_ds) is calculated from the at least one basic characteristic (a) during a normal operating mode and is used as a starting value for calculation of an associated long-term integral (dv, ds) when a starting condition for a crash operating mode is present, wherein the at least one long-term integral (dv, ds) is made available to a subsequent method as a characteristic (dv, ds) for generating the triggering signal for the vehicle occupant protection device.

2. Method according to Claim 1, **characterized in that** the starting condition for the crash operating mode is determined from the at least one basic characteristic (a).

3. Method according to Claim 1 or 2, **characterized in that** the at least one basic characteristic (a) is monitored during the crash operating mode, wherein, in order to return from the crash operating mode into the normal operating mode, a return process for sthe at least one long-term integral (dv, ds) is triggered by virtue of the fact that the monitored basic characteristic (a) reaches or undershoots a predefined threshold value.

4. Method according to Claim 3, **characterized in that** the long-term integral (dv, ds) is returned with a reducing factor.

5. Method according to Claim 4, **characterized in that** the reducing factor is set in a variable fashion in the range from 0 to 1 as a function of the application which is carried out.

6. Method according to one of Claims 1 to 3, **characterized in that** at least one long-term integral (ds) is fed back for the generation of a system reset signal, wherein the system reset signal resets all the system components into an initial state.

7. Method according to one of Claims 1 to 6, **characterized in that** the at least one generated characteristic corresponds to a speed reduction (dv) and/or an advance displacement (ds) of a vehicle occupant, which is determined as a basic characteristic from a sensed acceleration signal (a).

8. Device for generating at least one characteristic (dv, ds) for a vehicle occupant protection system, in particular for carrying out the method according to one of Claims 1 to 7, having at least one sensor (10) which senses at least one basic characteristic (a), and an evaluation and control unit (100) which evaluates the at least one basic characteristic (a) and generates the at least one characteristic (dv, ds), and outputs said characteristic (dv, ds) in order to generate a triggering signal for a vehicle occupant protection device, **characterized in that** the evaluation and control unit (100) calculates at least one short-term window integral (Win_dv, Win_ds) from the at least one basic characteristic (a) during a normal operating mode and uses the calculated short-term integral (Win_dv, Win_ds) as a starting value for calculation of an associated long-term integral (dv, ds) when a starting condition for a crash operating mode is present, wherein, during the crash operating mode, the evaluation and control unit (100) makes available the at least one long-term integral (dv, ds) to a subsequent method as a characteristic (dv, ds) for generating the triggering signal for the vehicle occupant protection device.

## Revendications

1. Procédé de formation d'au moins une caractéristique (dv, ds) pour un système de protection des passagers, cette caractéristique étant formée d'au moins une caractéristique de base (a) et étant évaluée pour former un signal de déclenchement d'un dispositif de protection des passagers,
**caractérisé en ce que**
en fonctionnement normal, au moins une intégrale (Win_dv, Win_ds) sur une courte fenêtre temporelle est calculée à partir de la ou des caractéristiques de base (a) et, en cas de présence d'une condition de démarrage d'un fonctionnement en situation d'accident, est utilisée comme valeur de démarrage du calcul d'une intégrale associée (dv, ds) sur une longue durée,
la ou les intégrales (dv, ds) sur une longue durée étant amenées à un procédé suivant comme caractéristique (dv, ds) de formation du signal de déclenchement du dispositif de protection des passagers.

2. Procédé selon la revendication 1, **caractérisé en ce que** la condition de démarrage du fonctionnement en situation d'accident est déterminée à partir de la ou des caractéristiques de base (a).

3. Procédé selon les revendications 1 ou 2, **caractérisé en ce que** pendant le fonctionnement en situation d'accident, la ou les caractéristiques de base (a) sont surveillées et **en ce que** pour repasser du fonctionnement en situation d'accident en fonctionnement normal, une opération de renvoi de la ou des intégrales (dv, ds) sur une longue durée est déclenchée selon que la caractéristique de base (a) surveillée atteint ou n'atteint pas une valeur de seuil prédéterminée.

4. Procédé selon la revendication 3, **caractérisé en ce que** l'intégrale (dv, ds) sur une longue durée est renvoyée avec un facteur réducteur.

5. Procédé selon la revendication 4, **caractérisé en ce que** le facteur réducteur est réglé de manière variable dans la plage de 0 à 1 en fonction de l'application exécutée.

6. Procédé selon l'une des revendications 1 à 3, **caractérisé en ce qu'**au moins une intégrale sur une longue durée (ds) rétroagit pour former un signal de réinitialisation du système, le signal de réinitialisation du système ramenant tous les composants du système à un état initial.

7. Procédé selon l'une des revendications 1 à 6, **caractérisé en ce que** la ou les caractéristiques formées correspondent à une diminution de vitesse (dv) et/ou à un pré-déplacement (ds) des passagers qui est déterminée comme caractéristique de base à partir d'un signal d'accélération détectée (a).

8. Dispositif de formation d'au moins une caractéristique (dv, ds) pour un système de protection des passagers, en particulier en vue de l'exécution du procédé selon l'une des revendications 1 à 7, et présentant au moins un détecteur (10) qui saisit au moins une caractéristique de base (a) et la délivre pour former un signal de déclenchement d'un dispositif de protection des passagers à une unité d'évaluation et de commande (100) qui évalue la ou les caractéristiques de base (a) et forme la ou les caractéristiques (dv, ds),
**caractérisé en ce que**
en fonctionnement normal, l'unité d'évaluation et de commande (100) calcule au moins une intégrale (Win_dv, Win_ds) sur une courte fenêtre temporelle à partir de la ou des caractéristiques de base (a) et, en cas de présence d'une condition de démarrage du fonctionnement en situation d'accident, utilise l'intégrale (Win_dv, Win_ds) calculée sur une courte durée comme valeur initiale du calcul d'une intégrale associée (dv, ds) sur une longue durée, l'unité d'évaluation et de commande (100) amenant pendant le fonctionnement en situation d'accident la ou les intégrales (dv, ds) sur une longue durée à un procédé suivant comme caractéristique (dv, ds) de formation du signal de déclenchement du dispositif de protection des passagers.
